# EUROPÄISCHE PATENTSCHRIFT

(11) **EP 1 308 053 B1**
(45) Veröffentlichungstag und Bekanntmachung des Hinweises auf die Patenterteilung: **24.03.2004**
(21) Anmeldenummer: 01953910.5
(22) Anmeldetag: 10.07.2001
(51) Int. Cl.: H04Q 3/00, H04M 7/00

(54) **VERFAHREN ZUR ÜBERTRAGUNG VON STEUERDINFORMATIONEN ZWISCHEN EINEN LEITUNGSVERMITTELNDEN UND EINEM PAKETVERMITTELNDEN KOMMUNIKATIONSNETZ**
METHOD FOR THE TRANSMISSION OF CONTROL INFORMATION BETWEEN A LINE-MEDIATED AND A PACKET-MEDIATED COMMUNICATION NETWORK
PROCEDE POUR LA TRANSMISSION D'INFORMATIONS DE COMMANDE ENTRE UN RESEAU DE COMMUNICATION A COMMUTATION DE CIRCUITS ET UN RESEAU DE COMMUNICATION A COMMUTATION DE PAQUETS

(30) Priorität: 08.08.2000 DE 10038688
(43) Veröffentlichungstag der Anmeldung: 07.05.2003
(73) Patentinhaber: SIEMENS AKTIENGESELLSCHAFT, 80333 München (DE)
(72) Erfinder: ASTLEITNER, Franz, 82065 Baierbrunn (DE); GLOCK, Ursula, 81369 München (DE); SCHMIDT, Helmut, 81371 München (DE); SCHNEIDERS, Gregor, 81477 München (DE)
(74) Vertreter: Berg, Peter, Dipl.-Ing.
(86) Internationale Anmeldenummer: PCT/DE2001/002576
(87) Internationale Veröffentlichungsnummer: WO 2002/013544

(56) Entgegenhaltungen:
- WO-A-00/11882
- KORPI M ET AL: "SUPPLEMENTARY SERVICES IN THE H.323 IP TELEPHONY NETWORK" IEEE COMMUNICATIONS MAGAZINE, IEEE SERVICE CENTER. PISCATAWAY, N.J, US, Bd. 37, Nr. 7, Juli 1999 (1999-07), Seiten 118-125, XP000835313 ISSN: 0163-6804 in der Anmeldung erwähnt

## Beschreibung

Die Erfindung betrifft ein Verfahren zur Übertragung von Steuerinformationen zwischen einem leitungsvermittelnden und einem paketvermittelnden Kommunikationsnetz gemäß dem Oberbegriff des Patentanspruchs 1. Zudem betrifft die Erfindung eine Steuereinheit, Kommunikationseinrichtung und eine Kommunikationsendeinrichtung gemäß den Oberbegriffen der Patentansprüche 12, 13 und 14. Hierbei wird eine Konvertierung von im leitungsvermittelnden Kommunikationsnetz verwendeten, Steuerinformationen umfassende Signalisierungsnachrichten in im paketvermittelnden Kommunikationsnetz verwendete, Steuerinformationen umfassende Signalisierungspakete durchgeführt.

Ursprünglich wurden verschiedene Arten von Kommunikationsnetzen entwickelt, um Sprache, Daten und Videodaten zu übertragen. Aufgrund der verschiedenen Einsatzmöglichkeiten dieser Kommunikationsnetze, wurden unterschiedliche Dienste entwickelt, wie z.B. Voice-Mail in herkömmlichen leitungsvermittelnden Kommunikationsnetzen und elektronische Mail in paketvermittelnden Kommunikationsnetzen, insbesondere im Internet. Heutzutage können Sprach-, Daten- und Videodienste von beiden Arten von Kommunikationsnetzen abgewickelt werden. Ergänzende Dienste (supplementary Services, wie z.B. Rufübernahme und Rufweiterleitung) können nun auch in paketvermittelnden Kommunikationsnetzen genutzt werden. Zur Zeit werden Standards z.B. in der H.323 - basierten Serie von ITU-T Empfehlungen (H.323, H.225, H.450: ITU-T Recommendations) für paketvermittelnde Kommunikationsnetze definiert und diskutiert. Ein Beispiel von H.323-Architektur ist der WO 0 011 882 zu entehmen. Durch den im Juli 1999 im IEEE Communications Magazin veröffentlichten Artikel "Supplementary Services in the H.323 IP Telephony Network" von Markku Korpi und Vineet Kumar, Seiten 118-125, ist eine H.323-Architektur für ergänzende Dienste bekannt, die eine Möglichkeit zum Zusammenspiel der Dienste zwischen leitungsvermittelnden und paketvermittelnden Kommunikationsnetzen aufzeigt.

In diesem Artikel wird ein Lösungsansatz vorgestellt, auf welche Weise nutzkanalbezogene Signalisierungsnachrichten zur Steuerung, Anforderung bzw. (De-)Aktivierung von im leitungsvermittelnden Kommunikationsnetz angebotenene Dienst- bzw. Leistungsmerkmalen auf im paketvermittelnden Netz verwendete Signalisierungspakete gemäß eines standardisierten Übertragungsprotokolls abgebildet werden können. Bei den Signalisierungsnachrichten im leitungsvermittelnden Kommunikationsnetz handelt es sich vorzugsweise um die in den ITU-Standards Q.931 und Q.932 definierten DSS1-Nachrichten. Als Übertragungsprotokoll für die Signalisierungspakete im paketvermittelnden Kommunikationsnetz, insbesondere im Internet, wird vorzugsweise das standardisierte H.225-Signalisierungsprotokoll verwendet. Dienstmerkmale, zu deren Nutzung nutzkanalbezogene Signalisierungsnachrichten notwendig sind, sind z.B. Call-Transfer (Rufübernahme), Dreier- und Große Konferenz, Halten, Anzeige von Gebühreninformation, geschlossene Benutzergruppe und die Rufnummernidentifikationsdienste.

Für im leitungsvermittelten Kommunikationsnetz verwendete nutzkanal- bzw. nutzverbindungsunabhängigen Signalisierungsnachrichten, die insbesondere der (De-)Aktivierung oder der Registrierung von Dienstmerkmalen an mit dem leitungsvermittelnden Kommunikationsnetz in Verbindung stehenden Nebenstellenanlagen (PBX) gibt es derzeit keine Abbildungsmöglichkeit auf solche zuvor genannte Signalisierungspakete im paketvermittelnden Kommunikationsnetz. Eine nutzkanal- bzw. nutzverbindungsunabhängige Signalisierung ist z.B. für Statusabfragen sowie zur Aktivierung bzw. Deaktivierung von Dienstmerkmalen z.B. Call-Forwarding, Call Completion on Busy Subscriber bzw. on No Reply (Automatischer Rückruf bei Besetzt oder bei keiner Antwort), Outgoing Call Barring (Rufsperren), Message Waiting Indication (Indikation von wartenden Nachrichten) erforderlich.

Eine denkbare analoge Abbildung von nutzkanalunabhängigen Signalisierungsnachrichten auf Signalisierungspakete im paketvermittelnden Kommunikatonsnetz gemäß der Abbildung von nutzkanalabhängigen Signalisierungsnachrichten auf Signalisierungspakete stößt insbesondere auf die Schwierigkeit, das die im leitungsvermittelnden Kommunikationsnetz verwendeten DSS1-Signalisierungsnachrichten einem andersartigen Übertragungsmechanismus unterliegen als die im paketvermittelnden Kommunikationsnetz verwendeten H.225-Signalisierungspakete. Die Übertragung von DSS1-Signalisierungsnachrichten bezieht sich nur auf einen lokalen Signalisierungsabschnitt, also zwischen einer Kommunikationsendeinrichtung bzw. Nebenstellenanlage und einer Vermittlungsstelle. Hierbei wird eine Terminierung der Übertragung von Signalisierungsnachrichten nicht auf DSS1-Protokollebene sondern durch die darunterliegenden Protokollschichten bewergstelligt. Im Gegensatz dazu werden H.225-Signalisierungspakete Punkt-zu-Punkt, d.h. über mehrere Signalisierungsabschnitte hinweg, übertragen, womit die Terminierung der Übertragung von Signalisierungspaketen erst nach Empfang einer Quittung auf H.225-Protokollebene erfolgt. Die im leitungsvermittelnden Kommunikationsnetz verwendeten Konzepte zur Übertragung von nutzverbindungsunabhängigen Signalisierungsnachrichten finden in den im paketvermittelnden Kommunikationsnetz verwendeten Signalisierungsprotokollen keine Entsprechung.

Die Aufgabe der Erfindung besteht darin, daß ein Verfahren zur Übertragung von Steuerinformationen zwischen einem leitunsvermittelnden und paketvermittelnden Kommunikationsnetz sowie das Verfahren unterstützende Vorrichtungen dahingehend ausgestaltet werden, daß die eingangs genannten Schwierigkeiten überwunden werden.

Diese Aufgabe wird hinsichtlich eines Verfahrens durch die im Kennzeichen des Anspruchs 1 angegebenen Merkmale und hinsichtlich von Vorrichtungen durch die in den Kennzeichen der Ansprüche 12, 13 und 14 angegebenen Mittel gelöst. Weitere Ausgestaltungen der Erfindung sind in Unteransprüchen gekennzeichnet.

Ein wesentlicher Aspekt der Erfindung besteht darin, daß zur Übertragung von Signalisierungspaketen, die verbindungsunabhängige auf zumindest ein Dienstmerkmal im leitungsvermittelnden Kommunikationsnetz bezogene Steuerinformationen umfassen, eine Signalisierungsverbindung im paketvermittelnden Kommunikationnetz aufgebaut wird, um mittels dieser Steuerinformationen das zumindest eine Dienstmerkmal des leitungsvermittelnden Kommunikationsnetzes im paketvermittelnden Kommunikationsnetz verbindungsunabhängig zu nutzen. Hierbei kann die Nutzung dieses zumindest einen Dienstmals eine Steuerung, eine Aktivierung bzw. Deaktivierung oder eine Anforderung oder eine Statusabfrage oder eine Benachrichtigung über den Status desselben betreffen. In diesem Zusammenhang bezieht sich eine verbindungsunabhängige Steuerinformation auf eine Steuerinformation zur Nutzung eines Dienstmerkmals, für deren Übertragung keine Nutzkanalverbindung erforderlich ist. Mit anderen Worten ausgedrückt, die Steuerinformation kann nutzverbindungsunabhängig übertragen werden.

Auf diese Weise findet nicht nur eine blose Konvertierung bzw. Abbildung von Signalisierungsnachrichten in Signalisierungspakete und/oder umgekehrt statt, sondern es wird durch den Aufbau einer Signalisierungsverbindung im paketvermittelnden Kommunikationsnetz ein Signalisierungsabschnitt zwischen zwei Endpunkten festgelegt, dessen Terminierung garantiert wird. Die im leitungsvermittelnden Kommunikationsnetz nutzverbindungsunabhängig transportierten, auf zumindest ein Dienstmerkmal bezogenen Steuerinformationen können somit auch im paketvermittelnden Kommunikationsnetz nutzverbindungsunabhängig übertragen werden, wodurch im paketvermittelnden Kommunikationnetz Übertragungsressourcen eingespart werden können.

Eine vorteilhafte Weiterbildung der Erfindung sieht vor, daß zumindest eine auf ein Dienstmerkmal im leitungsvermittelnden Kommunikationsnetz bezogene Steuerinformation in zumindest einen den Signalisierungserbindungsaufbau einleitenden Signalisierungspaket integriert ist. Dadurch wird erreicht, daß die in den Signalierungspaketen vorgesehenen Datenblöcke zur Übertragung von Steuerinformationen optimal ausgenutzt werden.

Eine weitere Ausgestaltung der Erfindung sieht bei Verwendung von standardisierten DSS1-Signalisierungsnachrichten im leitungsvermittelnden Kommunikationsnetz und H.225-Signalisierungspakete im paketvermittelnden Kommunikationsnetz vor, daß eine standardgemäße DSS1 REGISTER-Nachricht oder eine standardgemäße DSS1 NOTIFY- oder FACILITY-Nachricht mit einer DUMMY CALL REFERENZ (DCR) in eine im Standard festgelegte H.225 SETUP-Nachricht integriert ist. Somit kann bei dieser Vorgehensweise auf die im H.225-Signalisierungsprotokoll festgelegten Signalisierungsnachrichten zurückgegriffen werden.

Desweiteren sieht die Erfindung Vorrichtungen, insbesondere eine Steuereinheit zur Konvertierung von im leitungsvermittelnden Kommunikationsnetz verwendeten Signalisierungsnachrichten in im paketvermittelnden Kommunikationsnetz verwendete Signalisierungspakete und/oder umgekehrt, eine im leitungsvermittelnden Kommunikationsnetz angeordnete Kommunikationseinrichtung, vorzugsweise eine Vermittlungseinrichtung, sowie eine im paketvermittelnden Kommunikationsnetz angeordnete Kommunikationsendeinrichtung, beispielsweise ein H.323-Terminal, vor. Diese Einheiten bzw. Einrichtungen weisen insbesondere ein Modul zur Integration und/oder zum Extrahieren von nutzverbindungsunabhängigen, auf zumindest ein Dienstmerkmal im leistungsvermittelnden Kommunikationsnetz bezogenene Steuerinformationen in und/oder aus den zu übertragenden Signalisierungspaketen auf. Mit diesen Vorrichtungen wird vor allem das erfindungsgemäße Verfahren unterstützt, dessen Vorzüge auch für diese Vorrichtungen gelten.

Weitere Ausgestaltungen der Erfindung und deren Vorteile werden in Ausführungsbeispielen unter Bezugnahme auf eine Zeichnung näher erläutert.

In der Zeichnung zeigen:

Figur 1 einen Nachrichtenfluß, bei dem beispielsweise nutzverbindungsunabhängige, verbindungslose DSS1-Signalisierungsnachrichten auf H.225-Signalisierungspakete abgebildet werden.

Figur 2 einen Nachrichtenfluß, bei dem beispielsweise nutzverbindungsunabhängige, verbindungsorientierte DSS1-Signalisierungsnachrichten auf H.225-Signalisierungspakete umgesetzt werden.

In den Ausführungsbeispielen werden die gesamten DSS1-Signalisierungnachrichten in Signalisierungspaketen getunnelt, d.h. die gesamte in der DSS1-Signalisierungsnachricht vorhandene Steuerinformation (Nachrichtentyp und Informationselemente) werden in H.225-Signalisierungspaketen durch geeignete Parameter (z.B. nonStandardData, nonStandardControl, tunneledSignalingMessage) repräsentiert oder in einen separaten Datenblock geschrieben. Alternativ dazu ist es möglich, die DSS1-Informationselemente direkt in den H.225-Signalisierungspaketen zu übertragen.

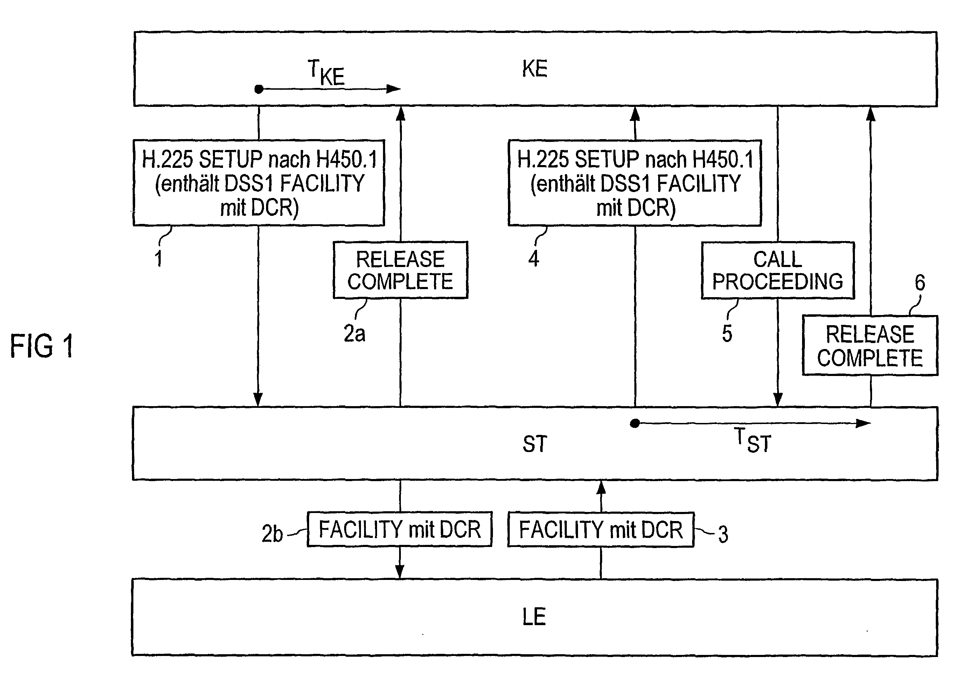

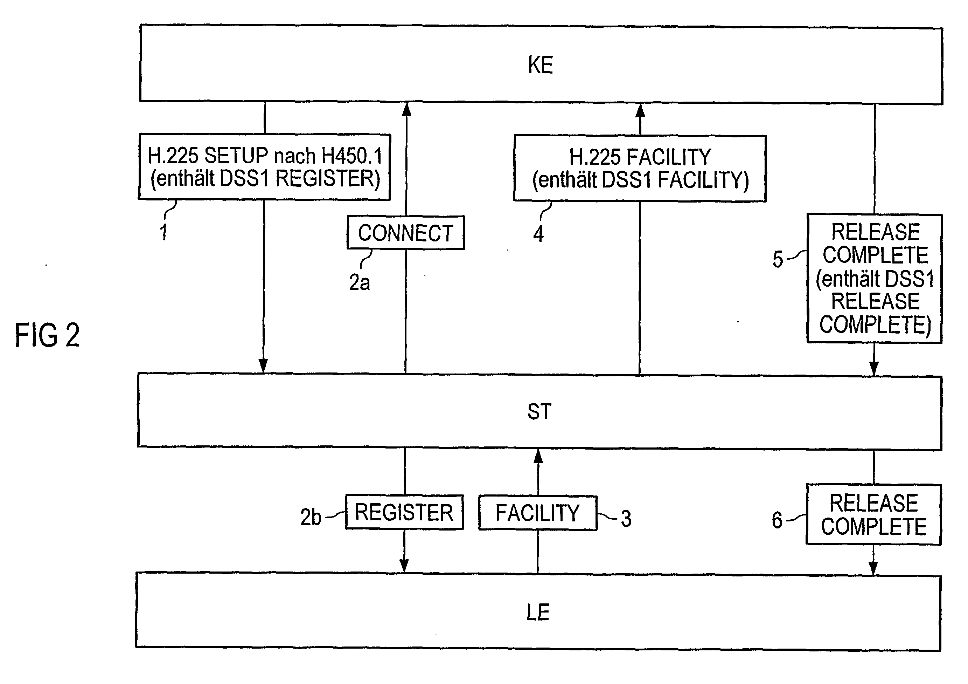

In den Figuren 1 und 2 werden folgende Netzkomponenten gezeigt, zwischen denen Signalisierungsnachrichten bzw. Signalisierungspakete, gekennzeichnet durch die Schritte 1-6, ausgetauscht werden. In den Figuren ist eine Kommunikationsendeinrichtung KE, z.B ein H.323-Terminal, angeordnet in einem paketvermittelnden Kommunikationsnetz, z.B. im Internet, sowie eine Vermittlungsstelle LE, angeordnet in einem leitungsvermittelnden Kommunikationsnetz, z.B. einem herkömmlichen Telefonnetz, dargestellt. Zwischen den beiden genannten Netzkomponenten KE und LE befindet sich eine Steuereinheit ST zur Protokollkonvertierung. Diese Steuereinheit kann auch in eine der beiden Einheiten KE oder LE integriert sein.

In der Figur 1 werden unter anderem zwei Nachrichtenflüsse gezeigt, bei denen je eine DSS1 FACILITY-Signalisierungsnachricht mit einer sogenannten DUMMY CALL REFERENZ (DCR) zwischen den genannten Komponenten KE und LE übertragen wird: Dabei wird im ersten Fall die zur Übertragung dienende H.225 Signalisierungsverbindung besonders resourcenschonend vom Empfänger der H.225 SETUP Nachricht, z.B. von der Steuereinheit ST, beendet. Im zweiten Fall (beginnend ab Schritt 3) wird die zeitgesteuerte Beendigung der H.225 Signalisierungsverbindung demonstriert, die zum Tragen kommt, falls die Verbindung nicht vom Empfänger ausgelöst wird.

In Schritt 1 sendet die Kommunikationsendeinrichtung KE eine H.225-SETUP-Nachricht, die eine getunnelte DSS1-FACILITY-Nachricht mit der DUMMY CALL REFERENZ (DCR) enthält, zur Steuereinheit ST und startet einen Zeitnehmer T_{KE}. In den Schritten 2a und 2b übermittelt die Steuereinheit ST die DSS1-FACILITY-Nachricht an die Vermittlungsstelle LE und beendet mittels einer H.225 RELEASE COMPLETE-Nachricht die zuvor von der Kommunikationsendeinrichtung aufgebaute H.225-Signalisierungsverbindung. Mit Empfang dieser Nachricht hält die Kommunikationsendeinrichtung den Zeitnehmer T_{KE} an. In Schritt 3 übermittelt die Vermittlungsstelle LE eine DSS1-FACILITY-Nachricht mit der DCR zur Steuereinheit ST. Dabei kann es sich um eine Antwortnachricht auf die vorangegangene FACILITY-Nachricht handeln. In Schritt 4 sendet die Steuereinheit ST eine H.225-SETUP-Nachricht, die die getunnelte DS51-FACILITY-Nachricht mit der DCR enthält, zur Kommunikationsendeinrichtung KE und startet einen Zeitnehmer T_{ST}. In Schritt 5 quittiert die Kommunikationsendeinrichtung KE den Empfang der SETUP-Nachricht mittels einer H.225 CALL PROCEEDING-Nachricht. In Schritt 6 beendet die Steuereinheit nach Ablauf von einer vom Zeitnehmer T_{ST} festgesetzten Zeitspanne mittels einer H.225 RELEASE COMPLETE-Nachricht die zuvor aufgebaute H.225-Signalisierungsverbindung zur Kommunikationsendeinrichtung.

Diese Vorgehensweise kann auch zur Übertragung von nutzverbindungsunabhängigen DSS1-NOTIFY-Nachrichten analog angewendet werden.

In Figur 2 wird ein Nachrichtenfluß gezeigt, bei dem nutzverbindungsunabhängige, verbindungsorientierte DSS1-Signalisierungsnachrichten, z.B. die REGISTER-Nachricht, in H.225-Signalisierungspakete getunnelt wird:

In Schritt 1 sendet die Kommunikationsendeinrichtung KE eine H.225-SETUP-Nachricht, die eine getunnelte DSS1-REGISTER-Nachricht enthält, zur Steuereinheit ST. In den Schritten 2a und 2b übermittelt die Steuereinheit ST eine DSS1-REGISTER-Nachricht an die Vermittlungsstelle LE und quittiert den Empfang der SETUP-Nachricht mittels einer in Richtung zur Kommunikationsendeinrichtung KE übertragenen H.225 CONNECT-Nachricht. In Schritt 3 übermittelt die Vermittlungsstelle LE eine zur selben, zuvor mit Hilfe der H.225 SETUP und DSS1 REGISTER-Nachricht aufgebauten Signalisierungsverbindung gehörende DSS1 FACILITY-Nachricht an die Steuereinheit ST. In Schritt 4 sendet die Steuereinheit eine H.225-FACILITY-Nachricht, die die getunnelte DSS1 FACILITY-Nachricht enthält, zur Kommunikationsendeinrichtung KE. In Schritt 5 beendet die Kommunikationsendeinrichtung mittels einer H.225 RELEASE COMPLETE-Nachricht, die eine DSS1 RELEASE COMPLETE-Nachricht enthält, die zuvor aufgebaute H.225-Signalisierungsverbindung. In Schritt 6 beendet die Steuereinheit mittels einer zur Vermittlungsstelle LE gesendeten DSS1 RELEASE COMPLETE-Nachricht die DSS1-Verbindung.

Zur Beendigung der in der Figur 2 offenbarten H.225-Signalisierungsverbindung sind verschiedene Mechanismen denkbar. Der Abbau dieser Verbindung kann mittels einer H.225 RELEASE COMPLETE-Nachricht, gegebenenfalls eine DSS1 RELEASE COMPLETE-Nachricht enthaltend, oder mittels einer H.225 FACILITY-Nachricht, eine DSS1 RELEASE-Nachricht (durch ETSI normiert) enthaltend, eingeleitet werden. Auch kann diese Verbindung nach Ablauf einer bestimmten Zeitspanne oder nach einer bestimmten Anzahl von gesendeten oder empfangenen Nachrichten beendet wird.

## Patentansprüche

1. Verfahren zur Übertragung von Steuerinformationen zwischen einem leitungsvermittelnden und einem paketvermittelnden Kommunikationsnetz, wobei eine Konvertierung von im leitungsvermittelnden Kommunikationsnetz verwendeten, Steuerinformationen umfassenden Signalisierungsnachrichten in im paketvermittelnden Kommunikationsnetz verwendete, Steuerinformationen umfassende Signalisisierungspakete und/oder umgekehrt durchgeführt wird, **dadurch gekennzeichnet, daß** im paketvermittelnden Netz eine Signalisierungsverbindung (1) zur Übertragung von Signalisierungspaketen, die verbindungsunabhängige, auf zumindest ein Dienstmerkmal im leitungsvermittelnden Kommunikationsnetz bezogene Steuerinformationen umfassen, aufgebaut wird, um mittels dieser Steuerinformationen das zumindest eine Dienstmerkmal des leitungsvermittelnden Kommunikationsnetzes im paketvermittelnden Kommunikationsnetz verbindungsunabhängig zu nutzen.

2. Verfahren nach Anspruch 1 **dadurch gekennzeichnet, daß** zumindest eine auf ein Dienstmerkmal im leitungsvermittelnden Kommunikationsnetz bezogene Steuerinformation in zumindest einem den Signalisierungsverbindungsaufbau einleitenden Signalisierungspaket integriert ist.

3. Verfahren nach Anspruch 2 **dadurch gekennzeichnet, daß** der Empfang des zumindest einen den Signalisierungsverbindungsaufbau einleitenden Signalisierungspaketes quittiert wird.

4. Verfahren nach einem der vorhergehenden Ansprüche **dadurch gekennzeichnet, daß** ein Signalisierungsverbindungsabbau nach Erhalt einer Quittung (2a) oder nach Ablauf einer festgelegten Zeitspanne (T_{KE}; T_{ST}) oder nach einer festgelegten Anzahl von übertragenen Signalisierungspaketen eingeleitet wird.

5. Verfahren nach einem der vorhergehenden Ansprüche **dadurch gekennzeichnet, daß** die Nutzung des zumindest einen Dienstmerkmals im leitungsvermittelnden Kommunikationsnetz die Steuerung oder Anforderung oder die Aktivierung oder Deaktivierung oder Statusabfrage oder eine Benachrichtigung über den Status desselben betrifft.

6. Verfahren nach einem der vorhergehenden Ansprüche **dadurch gekennzeichnet, daß** innerhalb des zumindest einen Signalisierungspaketes ein Datenblock für die zu zumindest eine zu übertragende nutzverbindungsunabhängige Steuerinformation vorgesehen ist.

7. Verfahren nach einem der vorhergehenden Ansprüche **dadurch gekennzeichnet, daß** innerhalb des zumindest einen Signalisierungspaketes bestimmte Parameter für die zumindest eine zu übertragende nutzverbindungsunabhängige Steuerinformation festgelegt sind.

8. Verfahren nach einem der vorhergehenden Ansprüche **dadurch gekennzeichnet, daß** im paketvermittelnden Kommunikationsnetz IP-basierte Protokolle zur Übertragung der Signalisierungspakete verwendet werden.

9. Verfahren nach einem der vorhergehenden Ansprüche **dadurch gekennzeichnet, daß** eine im leitungsvermittelnden Kommunikationsnetz verwendete, Steuerinformationen umfassende Signalisierungsnachricht durch eine DSS1-Nachricht repräsentiert wird.

10. Verfahren nach einem der vorhergehenden Ansprüche **dadurch gekennzeichnet, daß** ein im paketvermittelnden Netz verwendetes, Steuerinformationen umfassendes Signalisierungspaket durch eine H.225-Nachricht repräsentiert wird.

11. Verfahren nach einem der vohergehenden Ansprüche **dadurch gekennzeichnet, daß** in eine H.225 SETUP Nachricht eine standardgemäße DSS1 REGISTER-Nachricht oder eine standardgemäße DSS1 NOTIFY- oder DSS1 FACILITY-Nachricht mit einer DUMMY CALL REFERENZ integriert ist.

12. Steuereinheit (ST) zur Konvertierung von in einem leitungsvermittelnden Kommunikationsnetz verwendeten, Steuerinformationen umfassenden Signalisierungsnachrichten in in einem paketvermittelnden Kommunikationsnetz verwendete, Steuerinformationen umfassende Signalisisierungspakete und/oder umgekehrt, **dadurch gekennzeichnet, daß** die Steuereinheit (ST) auf der Sender- und/oder Empfängerseite einer im paketvermittelnden Kommunikationsnetz aufgebauten Signalisierungsverbindung (1) zur Übertragung von Signalisierungspaketen angeordnet ist und ein Modul zur Integration und/oder zum Extrahieren von verbindungsunabhängigen, auf zumindest ein Dienstmerkmal im leitungsvermittelnden Kommunikationsnetz bezogenen Steuerinformationen in und/oder aus den zu übertragenden Signalisierungspaketen aufweist.

13. Kommunikationseinrichtung (LE), angeordnet in einem leitungsvermittelenden Kommunikationsnetz, **dadurch gekennzeichnet, daß** sie ein Modul zur Integration und/oder zum Extrahieren von verbindungsunabhängigen, auf zumindest ein Dienstmerkmal im leitungsvermittelnden Kommunikationsnetz bezogenen Steuerinformationen in und/oder aus zu übertragenden Signalisierungspaketen aufweist.

14. Kommunikationsendeinrichtung (KE), angeordnet in einem paketvermittelnden Kommunikationsnetz, **dadurch gekennzeichnet, daß** sie ein Modul zur Integration und/oder zum Extrahieren von verbindungsunabhängigen, auf zumindest ein Dienstmerkmal im leitungsvermittelnden Kommunikationsnetz bezogenen Steuerinformationen in und/oder aus zu übertragenden Signalisierungspaketen aufweist.

## Claims

1. Method for transmitting control information between a line-switching and a packet-switching communications network, in which signalling messages which are used in the line-switching network and comprise control information are converted into signalling packets which are used in the packet-switching communications network and comprise control information, and/or vice versa, **characterized in that** a signalling connection (1) for transmitting signalling packets, which comprise connection-independent control information which relates to at least one service feature in the line-switching communications network, is set up in the packet-switching network in order to use the at least one service feature of the line-switching communications network, by means of this control information, in the packet-switching communications network independently of the connection.

2. Method according to Claim 1, **characterized in that** at least one control information item which relates to a service feature in the line-switching communications network is integrated in at least one signalling packet which initiates the setting up of a signalling connection.

3. Method according to Claim 2, **characterized in that** the reception of the at least one signalling packet which initiates the setting up of a signalling connection is acknowledged.

4. Method according to one of the preceding claims, **characterized in that** the setting up of a signalling connection is initiated after receiving an acknowledgement (2a), after a defined time interval (T_{KE}; T_{ST}) has passed, or after a defined number of signalling packets have been transmitted.

5. Method according to one of the preceding claims, **characterized in that** the use of the at least one service feature in the line-switching communications network relates to the control or request, or activation or deactivation, or status check or notification relating to the status thereof.

6. Method according to one of the preceding claims, **characterized in that** a data block for the at least one control information item which is to be transmitted and is independent of the user connection is provided within the at least one signalling packet.

7. Method according to one of the preceding claims, **characterized in that** specific parameters for the at least one control information item which, is to be transmitted and is independent of the user connection are defined within the at least one signalling packet.

8. Method according to one of the preceding claims, **characterized in that** IP-based protocols are used for transmitting the signalling packets in the packet-switching communication network.

9. Method according to one of the preceding claims, **characterized in that** a signalling message which is used in the line-switching communications network and comprises control information is represented by a DSS1 message.

10. Method according to one of the preceding claims, **characterized in that** a signalling packet which is used in the packet-switching network and comprises control information is represented by an H.225 message.

11. Method according to one of the preceding claims, **characterized in that** a standard DSS1 REGISTER message or a standard DSS1 NOTIFY or DSS1 FACILITY message is integrated with a DUMMY CALL REFERENCE in an H.225 SETUP message.

12. Control unit (ST) for conversion of signalling messages, which are used in a line-switching communications network and comprise control information, to signalling packets which are used in a packet-switching communications network and comprise control information, and/or vice versa, **characterized in that** the control unit (ST) is arranged at the transmitter and/or receiver end of a signalling connection (1), which is set up in the packet-switching communications network, for transmitting signalling packets, and has a module for integration and/or extraction of connection-independent control information, which relates to at least one service feature in the line-switching communications network, into and/or out of the signalling packets to be transmitted.

13. Communication device (LE), arranged in a line-switching communications network, **characterized in that** said device has a module for integration and/or for extraction of connection-independent control information, which relates to at least one service feature in the line-switching communications network, into and/or out of signalling packets to be transmitted.

14. Communications terminal (KE), arranged in a packet-switching communications network, **characterized in that** said terminal has a module for integration and/or for extraction of connection-independent control information, which relates to at least one service feature in the line-switching communications network, into and/or out of signalling packets to be transmitted.

## Revendications

1. Procédé de transmission d'informations de commande entre un réseau de communication à commutation de circuits et un réseau de communication à commutation de paquets, dans lequel on effectue une conversion de messages de signalisation utilisés dans le réseau de communication à commutation de circuits et comprenant des informations de commande en des paquets de signalisation utilisés dans le réseau de communication à commutation de paquets et comprenant des informations de commande, et/ou inversement, **caractérisé par le fait qu'**on établit dans le réseau transmettant des paquets une liaison de signalisation (1) pour la transmission de paquets de signalisation qui comprennent des informations de commande indépendantes de la liaison et se rapportant au moins à un indicateur de service dans le réseau de communication à commutation de circuits afin d'utiliser le ou les indicateurs de service du réseau de communication à commutation de circuits, au moyen de ces informations de commande et indépendamment de la liaison, dans le réseau de communication à commutation de paquets.

2. Procédé selon la revendication 1, **caractérisé par le fait qu'**au moins une information de commande se rapportant à un indicateur de service dans le réseau de communication à commutation de circuits est intégrée dans au moins un paquet de signalisation déclenchant l'établissement d'une liaison de signalisation.

3. Procédé selon la revendication 2, **caractérisé par le fait qu'**on accuse réception du ou des paquets de signalisation déclenchant l'établissement d'une liaison de signalisation.

4. Procédé selon l'une des revendications précédentes, **caractérisé par le fait qu'**on déclenche une libération de liaison de signalisation après la réception d'un accusé de réception (2a) ou après l'écoulement d'un intervalle de temps fixé (T_{KE} ; T_{ST}) ou après un nombre fixé de paquets de signalisation transmis.

5. Procédé selon l'une des revendications précédentes, **caractérisé par le fait que** l'utilisation du ou des indicateurs de service dans le réseau de communication à commutation de circuits concerne la commande ou demande ou l'activation ou désactivation ou interrogation d'état ou un avis concernant l'état de celui-ci.

6. Procédé selon l'une des revendications précédentes, **caractérisé par le fait que**, à l'intérieur du ou des paquets de signalisation, un bloc de données est prévu pour la ou les informations de commande à transmettre indépendantes de la liaison utile.

7. Procédé selon l'une des revendications précédentes, **caractérisé par le fait que**, à l'intérieur du ou des paquets de signalisation, certains paramètres sont spécifiés pour la ou les informations de commande à transmettre indépendantes de la liaison utile.

8. Procédé selon l'une des revendications précédentes, **caractérisé par le fait qu'**on utilise dans le réseau de communication à commutation de paquets des protocoles à base IP pour la transmission des paquets de signalisation.

9. Procédé selon l'une des revendications précédentes, **caractérisé par le fait qu'**un message de signalisation utilisé dans le réseau de communication à commutation de circuits et comprenant des informations de commande est représenté par un message DSS1.

10. Procédé selon l'une des revendications précédentes, **caractérisé par le fait qu'**un paquet de signalisation utilisé dans le réseau de communication à commutation de paquets et comprenant des informations de commande est représenté par un message H.225.

11. Procédé selon l'une des revendications précédentes, **caractérisé par le fait qu'**il est intégré dans un message H.225 SETUP un message DSS1 REGISTER standard ou un message DSS1 NOTIFY ou DSS1 FACILITY standard avec une référence dite DUMMY CALL REFERENCE.

12. Unité de commande (ST) pour la conversion de messages de signalisation utilisés dans un réseau de communication à commutation de circuits et comprenant des informations de commande en des paquets de signalisation utilisés dans un réseau de communication à commutation de paquets et comprenant des informations de commande, et/ou inversement, **caractérisée par le fait que** l'unité de commande (ST) est placée du côté de l'émetteur et/ou du récepteur d'une liaison de signalisation. (1) établie dans le réseau de communication à commutation de paquets pour la transmission de paquets de signalisation et qu'elle comporte un module pour l'intégration et/ou l'extraction d'informations de commande, indépendantes de la liaison et se rapportant à au moins un indicateur de service dans le réseau de communication à commutation de circuits, dans et/ou hors des paquets de signalisation à transmettre.

13. Dispositif de communication (LE), placé dans un réseau de communication à commutation de circuits, **caractérisé par le fait qu'**il comporte un module pour l'intégration et/ou l'extraction d'informations de commande, indépendantes de la liaison et se rapportant à au moins un indicateur de service dans le réseau de communication à commutation de circuits, dans et/ou hors des paquets de signalisation à transmettre.

14. Terminal de communication (KE), placé dans un réseau de communication à commutation de paquets, **caractérisé par le fait qu'**il comporte un module pour l'intégration et/ou l'extraction d'informations de commande, indépendantes de la liaison et se rapportant à au moins un indicateur de service dans le réseau de communication à commutation de circuits, dans et/ou hors des paquets de signalisation à transmettre.
